## Europäisches Patentamt
## European Patent Office
## Office européen des brevets

(11) Veröffentlichungsnummer: **0 037 596** ·

**B2**

(12) # NEUE EUROPÄISCHE PATENTSCHRIFT

(45) Veröffentlichungstag der neuen Patentschrift:
**25.11.87**

(21) Anmeldenummer: **81200237.6**

(22) Anmeldetag: **27.02.81**

(51) Int. Cl.⁴: **G 11 B 17/02,** G 11 B 17/04

(54) **Laufwerk für flexible Aufzeichnungsträger.**

(30) Priorität: **29.03.80 DE 3012311**

(43) Veröffentlichungstag der Anmeldung:
**14.10.81 Patentblatt 81/41**

(45) Bekanntmachung des Hinweises auf die Patenterteilung:
**15.02.84 Patentblatt 84/7**

(45) Bekanntmachung des Hinweises auf die Entscheidung
über den Einspruch:
**25.11.87 Patentblatt 87/48**

(84) Benannte Vertragsstaaten:
**BE CH DE FR GB IT LI NL SE**

(56) Entgegenhaltungen:
**DE-B-2 737 047**
**FR-A-2 279 196**
**FR-A-2 387 492**
**GB-A-2 002 567**
**US-A-3 940 793**

(73) Patentinhaber: **Philips Patentverwaltung GmbH,
Wendenstrasse 35 Postfach 10 51 49, D-2000
Hamburg 1 (DE)**
(84) Benannte Vertragsstaaten: **DE**

(73) Patentinhaber: **N.V. Philips' Gloeilampenfabrieken,
Groenewoudseweg 1, NL- 5621 BA Eindhoven (NL)**
(84) Benannte Vertragsstaaten: **BE CH FR GB IT LI NL SE**

(72) Erfinder: **Adamek, Manfred, Fliederweg 36, D-5242
Kirchen- Freusburg (DE)**
Erfinder: **Rinneburger, Klaus, Rathausstrasse 55,
D-5901 Wilnsdorf 1 (DE)**

(74) Vertreter: **Hartmann, Heinrich, Dipl.- Ing., Philips
Patentverwaltung GmbH Wendenstrasse 35
Postfach 10 51 49, D-2000 Hamburg 1 (DE)**

EP 0 037 596 B2

LIBER, STOCKHOLM 1987

## Beschreibung

Die Erfindung betrifft ein Laufwerk für flexible Aufzeichnungsträger mit einem Mittelloch, insbesondere Magnetplatten in Umschlaghüllen, mit

- einem Gestell mit einer Einführöffnung für Aufzeichnungsträger,
- einer Antriebsvorrichtung für einen um eine Drehachse drehbaren Plattenteller und mit einem mittels eines ortsfesten Befestigungsteils am Gestell befestigten Lagergehäuse für den Plattenteller,
- einem um die Drehachse des Plattentellers drehbar angeordneten und diesem gegenüber axial zwischen einer Betriebslage und einer gehobenen Lage verschiebbaren Plattenspannteil,
- einem die Führungsachse des Plattenspannteiles tragenden ortsfesten Lagerteil,
- einer gegenüber dem Gestell schwenkbaren Verschlußklappe zum Verschließen der Einführungsöffnung, und
- einer zwischen Verschlußklappe und Plattenspannteil angeordneten und mit diesen kraftschlüssig verbundenen Hebelanordnung zur Verschiebung des Plattenspannteiles in Abhängigkeit der Bewegung der Verschlußklappe.

Aus der DE-A Nr. 27 16 848 ist ein Laufwerk bekannt, bei dem die Verschlußklappe mit einer Rollen- und Spannhebelanordnung sowie mit dem abhebbaren Teil der Antriebsvorrichtung einschließlich deren Achse ein auswechselbares Teil bilden, das als Ganzes mit dem übrigen Gehäuse verbunden wird. Bei diesem Laufwerk besteht die Gefahr, daß durch die Trennung der Achsen zwischen den beiden Teilen des Laufwerks die Achsen infolge von Herstellungstoleranzen oder Verschleißerscheinungen nicht fluchten, so daß die Einspannung des flexiblen Aufzeichnungsträgers beeinträchtigt sein kann.

Einen entsprechenden Nachteil weist auch die US-A Nr. 3940793 auf.

Der Erfindung liegt die Aufgabe zugrunde, ein Laufwerk für einen flexiblen Aufzeichnungsträger zu schaffen, bei dem die Antriebselemente und der Spannkonus leicht montierbar sind und eine Lagerung dieser Elemente um genauer zueinander fluchtende Drehachsen eindeutig gewährleistet ist.

Diese Aufgabe wird dadurch gelöst,
- daß sowohl das ortsfeste Lagerteil für die Führungsachse als auch das ortsfeste Befestigungsteil für das Lagergehäuse des Plattentellers gemeinsam mit dem Gestell ein einziges Gußteil bilden,
- daß das Befestigungsteil für das Lagergehäuse als koaxial angeordnete Buchse ausgebildet ist, welche in einem Arbeitsgang mit der Buchse zur Aufnahme der Führungsachse hergestellt ist, und
- daß das Lagergehäuse von außen in das Gestell eingeführt und befestigt ist.

Da das Befestigungsteil für das Lagergehäuse als koaxial angeordnete Buchse ausgebildet und das Lagergehäuse mit einem Flansch versehen und auf der Stirnseite der Buchse befestigt ist, wird es möglich, die Lagerbuchse für das Antriebselement mit Plattenteller und die Lagerung der Führungsachse für den Spannkonus in einem Arbeitsgang herzustellen.

Durch die DE-B-27 37 047 ist eine zentrierende Spannvorrichtung für scheibenförmige Folienspeicher bekannt, bei welcher die Führungsachse des Spannteils unlösbarer Bestandteil des Gestells ist. Auch ist dessen Lagergehäuse von außen in das Gestell eingeführt. Dort wird bereits ohne Angabe konkreter Lösungsmittel gefordert, daß die beiden Spannteile fest aufeinander ausgerichtet sind. Dieser Druckschrift ist jedoch kein Hinweis darauf zu entnehmen, daß eine erhöhte Genauigkeit der Fluchtung der Achsen des Plattentellers und des Plattenspannteils erstrebenswert und dadurch erreichbar ist, daß das Befestigungsteil für das Lagergehäuse als koaxial angeordnete Buchse ausgebildet ist, die in einem Arbeitsgang mit der Buchse zur Aufnahme der Führungsachse hergestellt ist.

Gemäß weiterer Ausbildung der Erfindung besitzt das Gestell im Bereich der Einführöffnung für den Aufzeichnungsträger über mindestens einen Teil seiner Breite eine nach aussen abfallende Schräge. Ebenso besitzt die Verschlussklappe über mindestens einen Teil ihrer Breite einen Ansatz. Schräge und Ansatz bilden dadurch im geöffneten Zustand der Verschlussklappe einen Einführtrichter für den Aufzeichnungsträger. Hierdurch wird das Einführen des Aufzeichnungsträgers erleichtert und dieser zwangsläufig in den Raum zwischen Plattenteller und Spannkonus geleitet.

Die kraftschlüssige Verbindung der Hebelanordnung zum Verschieben des Spannkonus mit der Verschlussklappe wird gemäss weiterer Ausbildung der Erfindung dadurch erreicht, dass die Hebelanordnung eine leicht gekrümmte Verlängerung aufweist, auf der eine am Ansatz der Verschlussklappe angeordnete Rolle bei der Betätigung der Verschlussklappe abrollt.

Da die Rolle beim Verschliessen der Klappe auf der Verlängerung abrollt, wird einerseits der zur Drehachse der Hebelanordnung bestehende Hebelarm stetig verlängert und andererseits dieser Berührungspunkt zur Drehachse der Verschlussklappe so verschoben, dass mit zunehmendem Verschluss der Einführöffnung die aufzubringende Kraft annähernd gleich bleibt oder nur unwesentlich erhöht wird.

Die Erfindung wird anhand eines in der Zeichnung dargestellten Ausführungsbeispieles näher erläutert. Es zeigen:

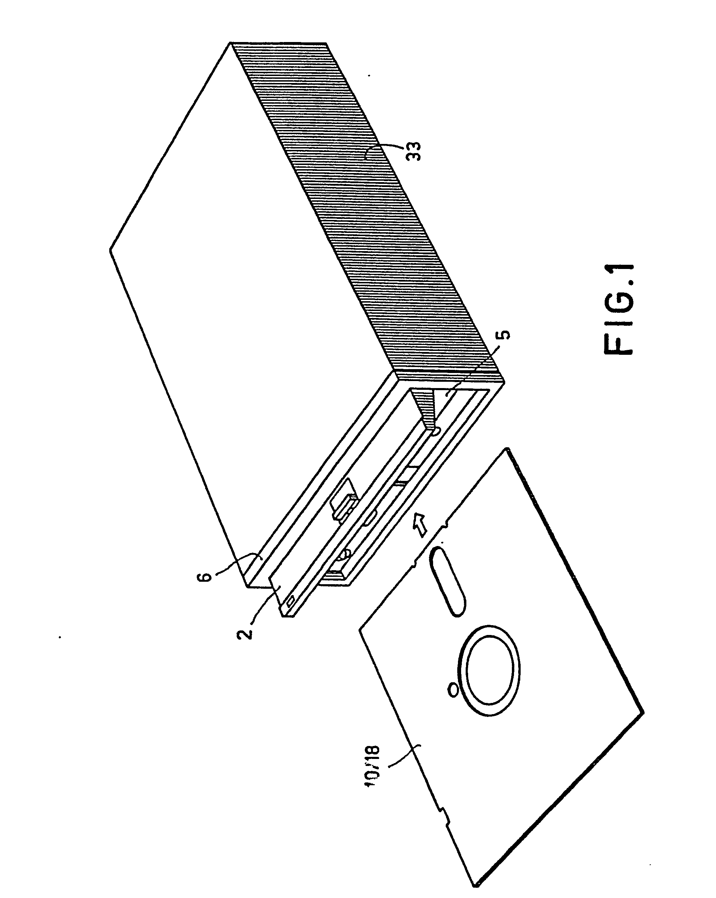

Fig. 1 die perspektivische Ansicht eines Laufwerkes mit geöffneter Verschlussklappe und davor angeordnetem Aufzeichnungsträger,

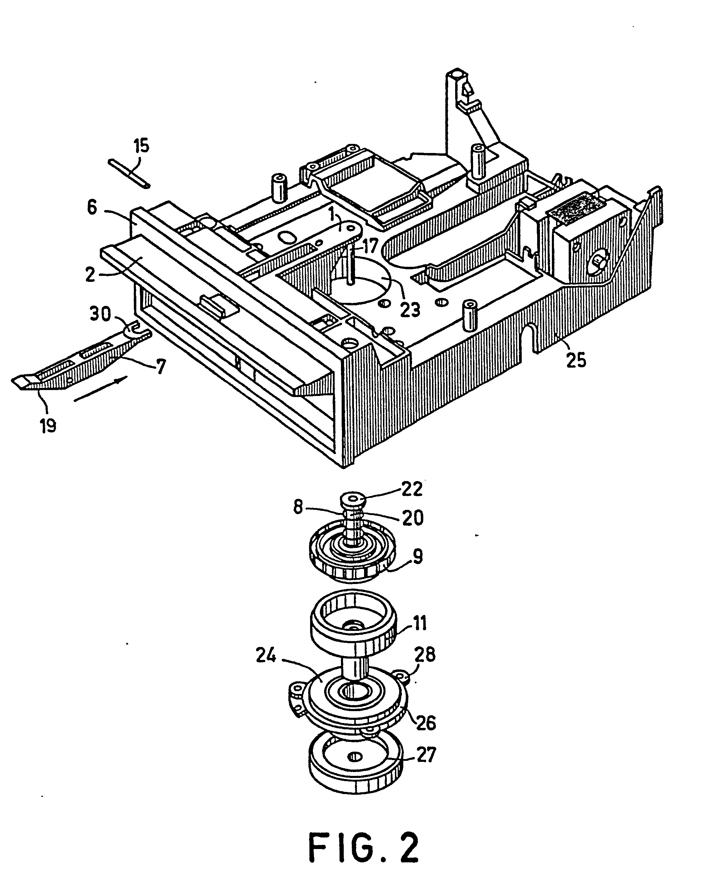

Fig. 2 eine Explosionszeichnung des Laufwerkes,

Fig. 3 das Laufwerk teilweise im Schnitt, und

Fig. 4 die Vorderansicht des Laufwerkes bei geöffneter Verschlussklappe.

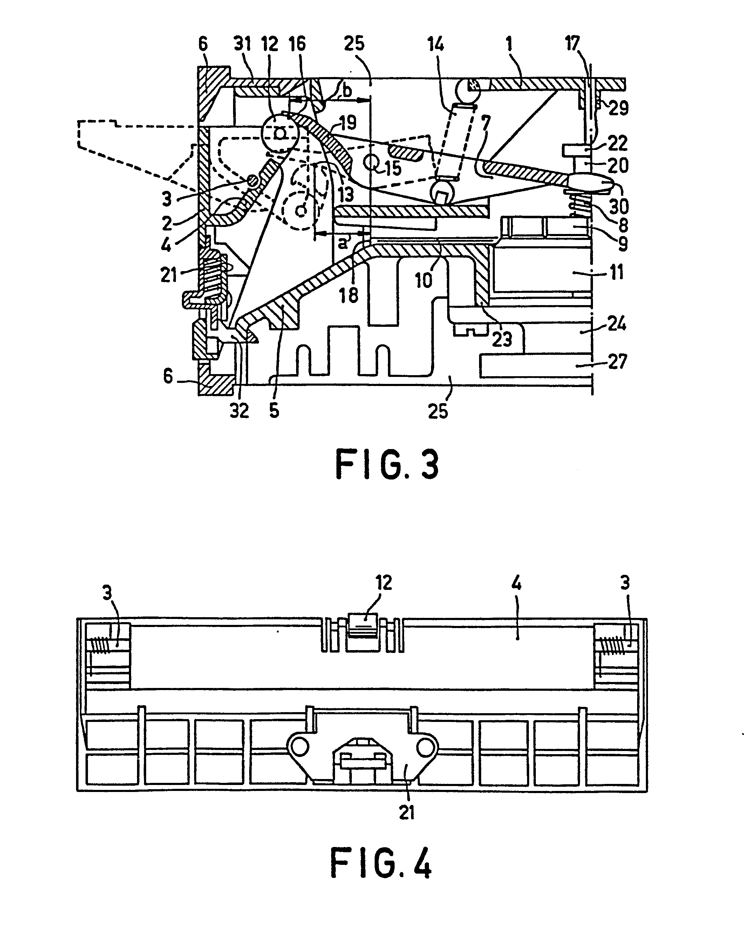

In einem als Gussteil ausgebildeten Gestell 25 ist die Antriebsvorrichtung für einen flexiblen Aufzeichnungsträger angeordnet, der aus der Magnetplatte 10 und der ihn umgebende Umschlaghülle 18 besteht. Die Antriebsvorrichtung, die in Fig. 3 nur auf einer Seite der Symmetrieachse im Schnitt dargestellt ist, besteht aus dem angetriebenen Teil und dem abhebbaren Teil, der als Zentrier- oder Spannkonus 9 ausgebildet ist. Der angetriebene Teil besteht aus dem Plattenteller 11 und dem Lagergehäuse 24 mit der Antriebsscheibe 27, die in bekannter Weise über einen Riemen mit einem Elektromotor angetrieben wird. Das Lagergehäuse besitzt einen Flansch 26, mit dem es in den als Buchse ausgebildeten Befestigungsteil 23 passgerecht eingesetzt wird. Mit den Ösen 28 ist es auf dem Befestigungsteil 23 lösbar angeordnet. Die Buchse wird in dem Gestell 25 derart eingefräst, dass ihre Mittelachse mit der Mittelachse der Führungsachse 17 für den Spannkonus 9 fluchtend ist. Zweckmässig wird dies erreicht, wenn die Buchse und die passgerechte Buchse 29 für die Führungsachse 17 in einem Arbeitsgang hergestellt werden.

Die Durchmesser des Plattentellers 11 und des Spannkonus 9 sind kleiner als der Buchsendurchmesser, so dass der gesamte angetriebene Teil nach seinem Zusammenbau und der Spannkonus 9 nach Befestigung der Führungsachse 17 von unten durch das Befestigungsteil 23 in das Gestell 25 eingeführt und befestigt werden können.

Der Spannkonus 9 besitzt eine Hülse 20, mit der er auf der Führungsachse 17 verschoben werden kann. Diese Verschiebung erfolgt durch die gabelförmige Ausbildung des vorderen Endes des Spannhebels 7. In der in Fig. 3 gezeichneten Arbeitsstellung dieses Spannhebels 7 wird ein Druck auf die um die Hülse 20 liegende Druckfeder 8 ausgeübt, die ihrerseits dadurch den Spannkonus 9 in den Plattenteller 11 des Antriebes hineindrückt und den flexiblen Aufzeichnungsträger 10 in der Antriebsvorrichtung zentriert und einklemmt. In dieser Stellung des Spannhebels 7 ist die Rückholfeder 14 gespannt, die einerseits am Spannhebel 7 und andererseits am Gestell 25 befestigt ist. Der Einbau des Spannhebels 7 erfolgt vor der Befestigung der Verschlussklappe 2 von der Einführöffnung her. Er wird so weit eingeführt, bis sein vorderes Gabelende 30 die Hülse 20 zwischen deren Gegenlager 22 und dem oberen Ende der Druckfeder 8 umgreift. Anschliessend wird die Lagerwelle 15 seitlich in eine entsprechende Lagerung des Gestelles eingeführt. Um diese Lagerwelle 15 ist der Spannhebel 7 durch die Betätigung der Verschlussklappe drehbar.

Wird die Verschlussklappe 2 in die in Fig. 3 gestrichelt gezeichnete Stellung um ihre Drehachse 3 geschwenkt, so wird der Spannhebel 7 freigegeben. Dieser kann dem Druck der Feder 8 nachgeben, bis das Gabelende 30 gegen das Gegenlager 22 zu liegen kommt. Anschliessend wird er dann zusammen mit der Hülse 20 und dem Spannkonus 9 in die nur teilweise gestrichelt dargestellte Lage durch die Rückholfeder 14 verschwenkt.

Soll ein neuer Aufzeichnungsträger 10 eingeführt werden, so kann dies infolge der beiden schrägen Ansätze 4 und 5 gefahrlos geschehen, da keine Widerstände gegeben sind und der Aufzeichnungsträger 10 zwangsläufig durch die so gebildete Trichteröffnung eingeführt werden kann. Wie aus Fig. 4 ersichtlich, die eine Ansicht der Verschlussklappe 2 aus dem Gestellinneren heraus nach vorn darstellt, reicht der schräge Ansatz 4 fast über die ganze Breite der Verschlussklappe 2.

Wird nun die Verschlussklappe 2 vom geöffneten in den geschlossenen Zustand betätigt und um ihre Drehachse 3 geschwenkt, so erfolgt dies zunächst ohne Gegenkraft, bis ihre Rolle 12 im Auflagepunkt 13 die kurvenartige Verlängerung 19 des Spannhebels 7 berührt. Im Auflagepunkt 13 besteht der geringste Abstand a dieses Punktes von der Lagerwelle 15 des Spannhebels 7. Beim weiteren Verschwenken der Verschlussklappe 2 wird nun der Spannhebel 7 um die Lagerwelle 15 gedreht. Dabei ist an der Klappe 2 nur die relativ geringe Federkraft der Rückholfeder 14 zu überwinden. Beim weiteren Verschwenken trifft der Spannhebel 7 auf die Druckfeder 8, deren Federkraft grösser ist als die der Rückholfeder 14, so dass nunmehr eine grössere Kraft beim Betätigen der Verschlussklappe aufzubringen wäre, wenn nicht inzwischen der Auflagepunkt 13 weiter vom Drehpunkt des Spannhebels 7 weggewandert wäre. Damit wird der Hebelarm grösser, so dass bei gleichbleibender Kraft auf die Verschlussklappe eine höhere Federkraft überwunden werden kann. Der Hebelarm a vergrössert sich, bis schliesslich der Auflagepunkt 16 erreicht ist. In dieser Stellung ist die Verschlussklappe 2 geschlossen und kann durch die Verriegelung 21 arretiert werden, Die Vergrösserung des Abstandes a bis zum maximalen Abstand b beträgt beim vorliegenden Beispiel etwa das 1,5- bis 2fache und kann ohne weiteres den durch die Federn 8 und 14 gegebenen Bedingungen angepasst werden. Dieses Kräfteverhältnis wird noch dadurch unterstützt, dass der Abstand zwischen der Drehachse 3 und dem wandernden Auflagepunkt 13 während der Drehbewegung der Verschlussklappe 2 annähernd konstant bleibt. Dazu ist die Verlängerung 19 des Spannhebels 7 leicht gekrümmt.

Dadurch, dass die Drehachse 3 der Verschlussklappe 2 weit in das Gehäuse 1 hineingezogen ist, ragt die Verschlussklappe im geöffneten Zustand nicht weit aus dem Gehäuse heraus, so dass der ausgeworfene Aufzeichnungsträger 10 leicht ergriffen werden kann.

Die aus Kunststoff hergestellte Frontblende 6 ist auf das Gehäuse 25 durch Rastklammern 31 und 32 aufsteckbar. Dadurch kann zum Einbau des Laufwerkes in ein Gehäuse 33 die Frontblende 6 jedem Öffnungsmass angepasst werden. Ausserdem enthält die Verschlussklappe 2 eine an sich bekannte Rasterung 21, mit der sie im geschlossenen Zustand hinter einen Ansatz der Frontblende 6 greift. Durch Verschieben dieser Rasterung 21 wird dann die Verschlussklappe entriegelt.

**Patentansprüche**

1. Laufwerk für flexible Aufzeichnungsträger mit einem Mittelloch, insbesondere Magnetplatten in Umschlaghüllen, mit
   - einem Gestell mit einer Einführöffnung für Aufzeichnungsträger,
   - einer Antriebsvorrichtung für einen um eine Drehachse drehbaren Plattenteller und mit einem mittels eines ortsfesten Befestigungsteils am Gestell befestigten Lagergehäuse für den Plattenteller,
   - einem um die Drehachse des Plattentellers drehbar angeordneten und diesem gegenüber axial zwischen einer Betriebslage und einer gehobenen Lage verschiebbaren Plattenspannteil,
   - einem die Fürhungsachse des Plattenspannteiles tragenden ortsfesten Lagerteil,
   - einer gegenüber dem Gestell Schwenkbaren Verschlußklappe zum Verschließen der Einführöffnung, und
   - einer zwischen Verschlußklappe und kraftschlüssig verbundenen Hebelanordnung zur Verschiebung des Plattenspannteiles in Abhängingkeit der Bewegung der Verschlußklappe,
   dadurch gekennzeichnet,
   - daß sowohl das ortsfeste Lagerteil für die Führungsachse als auch das ortsfeste Befestigungsteil für das Lagergehäuse des Plattentellers gemeinsam mit dem Gestell ein einziges Gußteil bilden,
   - daß das Befestigungsteil für das Lagerhäuse als koaxial angeordnete Buchse ausgebildet ist, welche in einem Arbeitsgang mit der Buchse zur Aufnahme der Führungsachse hergestellt ist, und
   - daß das Lagergehäuse von außen in das Gestell eingeführt und befestigt ist.

2. Laufwerk nach Anspruch 1, dadurch gekennzeichnet, daß der Durchmesser des Plattenspannteiles kleiner ist als der Innendurchmesser der Buchse.

3. Laufwerk nach Anspruch 1, dadurch gekennzeichnet, daß das Gestell im Bereich der Einführöffnung für den Aufzeichnungsträger über mindestens einen Teil der Breite des Gestelles eine nach außen abfallende Schräge besitzt, daß die Verschlußklappe einen über mindestens einen Teil seiner Breite reichenden Ansatz umfaßt, und daß Schräge und Ansatz im geöffneten Zustand der Verschlußklappe einen Einführtrichter für den Aufzeichnungsträger bilden.

4. Laufwerk nach Anspruch 1, dadurch gekennzeichnet, daß die Hebelanordnung eine leicht gekrümmte Verlängerung aufweist, auf der eine am Ansatz der Verschlußklappe angeordnete Rolle bei der Betätigung der Verschlußklappe abrollt.

**Claims**

1. A drive apparatus for a flexible record carrier with a central hole, in particular for magnetic disks contained in enclosures, which apparatus comprises
   - a frame with an entrance opening for a record carrier,
   - a drive mechanism for a turntable which is rotatable about an axis of rotation, which mechanism comprises a bearing housing for the turntable, which housing is secured to the frame, by means of a stationary fixing part,
   - a disk-clamping member which is arranged to be rotatable about the axis of rotation of the turntable and which is axially movable relative to said turntable between an operating position and a lifted position,
   - a stationary bearing member which carries a guide spindle for the disk-clamping member,
   - a cover which is pivotable relative to the frame for closing the entrance opening, and
   - a lever mechanism which is arranged between the cover and the disk-clamping member and which is force-coupled thereto, for moving the disk-clamping member in accordance with the movement of the cover,
   characterized in that
   - both the stationary bearing member for the guide spindle and the stationary fixing member for the bearing housing of the turntable together with the frame are formed as a single casting,
   - the fixing member for the bearing housing is constructed as a coaxially arranged bush which together with the bush for receiving the guide spindle is manufactured in one operation, and
   - the bearing housing is introduced into and secured to the frame from the outside

2. A drive apparatus as claimed in Claim 1, characterized in that the diameter of the disk-clamping member is smaller than the inner diameter of the bush.

3. A drive apparatus as claimed in Claim 1, characterized in that the frame has a portion which slopes downwardly towards the exterior at the location of the entrance opening for the record carrier, which portion extends over at least a part of the width of the frame, and the cover comprises a projecting portion which extends over at least a part of the width of the cover, and the sloping portion and the projecting portion constitute a funnel for the insertion of the record carrier in the open position of the cover.

4. A drive apparatus as claimed in Claim 1, <u>characterized in that</u> the lever comprises a slightly curved extension, over which a roller, which is arranged on the projecting portion of the cover, rolls when the cover is actuated.

## Revendications

1. Mécanisme d'entraînement pour des supports d'enregistrement souples comportant un trou central, en particulier des disques magnétiques dans des enveloppes de protection, comportant

- un bâti présentant une ouverture d'entrée pour des supports d'enregistrement,
- un dispositif d'entraînement pour un plateau à disque pouvant tourner autour d'un axe de rotation, équipé d'un boîtier de palier pour le plateau à disque fixé au bâti au moyen d'une partie de fixation fixe,
- un organe de serrage de disque monté de manière a pouvoir tourner autour de l'axe de rotation du plateau à disque et pouvant coulisser par rapport à celui-ci axialement entre une position de fonctionnement et une position soulevée,
- un organe de centrage fixe portant l'axe de guidage de l'organe de serrage de disque,
- un volet de fermeture pouvant pivoter par rapport au bâti pour fermer l'ouverture d'entrée, et
- un dispositif à levier monté entre le volet de fermeture et l'organe de serrage de disque et coopérant avec ces éléments pour faire coulisser l'organe de serrage de disque en fonction du déplacement du volet de fermeture, caractérisé en ce
- qu'aussi bien l'organe de centrage fixe destiné à l'axe de guidage que la partie de fixation fixe destinée au boîtier de palier du plateau à disque forment une seule pièce moulée en compagnie du bâti,
- que l'organe de fixation pour le boîtier de palier a la forme d'une douille coaxiale qui est fabriquée en une seule opération avec la douille destinée à recevoir l'axe de guidage, et
- que le boitier de palier est introduit et fixé par l'extérieur dans le bâti.

2. Mécanisme d'entraînement suivant la revendication 1, caractérisé en ce que le diamètre de l'organe de serrage de disque est inférieur au diamètre intérieur de la douille.

3. Mécanisme d'entraînement suivant la revendication 1, caractérisé en ce que le bâti comporte, dans la zone de l'ouverture d'entrée pour le support d'enregistrement, sur au moins une partie de sa largeur, une paroi oblique descendant vers l'extérieur, que le volet de fermeture comporte une saillie s'étendant sur au moins une partie de sa largeur et que la paroi oblique ainsi que la saillie forment, dans la position d'ouverture du volet de fermeture, un pavillon d'entrée pour le support d'enregistrement.

4. Mécanisme d'entraînement suivant la revendication 1, caractérisé en ce que le dispositif à levier présente un prolongement légèrement courbé sur lequel un galet monté sur la saillie du volet de fermeture roule lorsque ce volet de fermeture est actionné.

0 037 596

FIG.1

# FIG. 2

FIG. 3

FIG. 4